**Europäisches Patentamt**

**European Patent Office**

**Office européen des brevets**

(19)

(11) Veröffentlichungsnummer: **0 005 175**
**A1**

(12)

# EUROPÄISCHE PATENTANMELDUNG

(21) Anmeldenummer: **79101012.7**

(22) Anmeldetag: **03.04.79**

(51) Int. Cl.²: **H 04 M 1/23, H 01 H 13/70**

(30) Priorität: **20.04.78 DE 2817362**
**05.02.79 DE 2904182**
**05.02.79 DE 2904258**

(43) Veröffentlichungstag der Anmeldung: **14.11.79**
**Patentblatt 79/23**

(84) Benannte Vertragsstaaten: **CH DE FR GB IT SE**

(71) Anmelder: **SIEMENS AKTIENGESELLSCHAFT Berlin und München, Postfach 261, D-8000 München 22 (DE)**

(72) Erfinder: **Geese, Albert, Rosenstrasse 17, D-8021 Hohenschäftlarn (DE)**
Erfinder: **Heiss, Reinhold, Gautinger Strasse 25, D-8021 Neuried (DE)**
Erfinder: **Schuler, Erhard, Mittenwalder Strasse 112, D-8031 Gröbenzell (DE)**

(54) **Wähltastatur.**

(57) Die Wähltastatur besitzt eine elektromechanische Schaltermatrix aus mehreren, bandförmigen elektrischen Leitern (1 . . . 7), die in zwei parallelen Ebenen, rechtwinkelig zueinander, sich paarweise kreuzend angeordnet sind, und aus den Kreuzungspunkten zugeordneten Tasten (8).

Kennzeichnendes Merkmal ist, daß jeweils wenigstens einer der an einer Kreuzung beteiligten Leiter (1) im Kreuzungsbereich einen materialhomogen mitgestalteten Kontaktarm (9) besitzt und daß alle Leiter ferner materialhomogen mitgestaltete Halteelemente (11, 28, 29) für die Befestigung an einer Trägerplatte (10) und je eine Anschlußfahne (15) für die steckbare galvanische Verbindung mit einer der Schaltermatrix zugeordneten, elektronischen Baugruppe (17) besitzen.

Die sich kreuzenden Leiter (1, 2, 3. und 4 . . . 7) sind auf den einander abgewandten beiden Seiten der Trägerplatte (10) festgelegt und in Durchbrüchen (12) der Trägerplatte über den jeweiligen Kontaktarm (9) durch Tastendruck galvanisch miteinander kontaktierbar.

Die Wähltastatur ist anwendbar in Fernsprechgeräten für beliebige Selbstwählsysteme.

ACTORUM AG

- 1 -

SIEMENS AKTIENGESELLSCHAFT     Unser Zeichen
Berlin und München     VPA 78 P 6088 EUR

## Wähltastatur.

Die Erfindung betrifft eine Wähltastatur für fernmeldetechnische Geräte, insbesondere Fernsprechgeräte, mit
einer mechanischen Kontakteinrichtung aus mehreren,
matrixartig in zwei parallelen Ebenen verlaufenden,
sich von einer Ebene zur anderen etwa rechtwinklig
kreuzenden, gegeneinander isolierten, an einer Trägerplatte festgelegten Leiterstreifen, weiterhin mit den
Kreuzungspunkten der Leiterstreifen zugeordneten, senkrecht zur Matrixebene niederdrückbaren, an den Kreuzungspunkten Kontakte bewirkenden Tasten, sowie mit an
den Leiterstreifen einstückig mitgeformten Anschlußfahnen für die unmittelbare, galvanische Verbindung
der mechanischen Kontakteinrichtung mit einer von einer
Schaltungsplatte gebildeten elektronischen Kodierungseinrichtung.

Mit einer solchen Wähltastatur hat der Fernsprechteilnehmer von seinem Gerät aus die Möglichkeit, die amtsseitigen Einrichtungen zum Verbindungsaufbau zu steuern.

Mur 1 Ky / 28.2.1979

Während des Betätigens einer Taste werden dabei in der Wähltastatur der jeweiligen Taste zugeordnete elektrische Wählkriterien eingestellt und in die Teilnehmerschleife geschaltet, wo sie amtsseitig automatisch abgefragt und verarbeitet werden können.

Bei einer bekannten derartigen Wähltastatur (DAS 2 455 522) wirken die Tasten jeweils auf den Kreuzungspunkten zugeordnete, im Ruhezustand konvex zu den Tasten gewölbte, separate Kontaktplättchen. Diese Plättchen sind so auf der Trägerplatte festgelegt, daß sie jeweils mit ihrem Randbereich einen Leiterstreifen der ersten Matrixebene im Bereich eines Kreuzungspunktes galvanisch leitend berühren. Unter dem Kontaktplättchen ist der betreffende Leiterstreifen mit einem Durchbruch versehen. In diesen Durchbruch ragt ein Vorsprung des kreuzenden Leiterstreifens der zweiten Ebene, der vom mittleren Bereich des Kontaktplättchens mit Abstand überwölbt ist. Die Tasten erlauben es, durch Druck auf die gewölbte Fläche der Kontaktplättchen diese soweit zu verformen, daß ihre Wölbung elastisch in die entgegengesetzte Richtung umspringt. Dieser Effekt wird dazu benutzt, eine galvanische Verbindung des jeweiligen Plättchens auch mit dem Kontaktvorsprung am Leiterstreifen der zweiten Matrixebene herzustellen und auf diese Weise die sich kreuzenden Leiterstreifen galvanisch miteinander zu verbinden, so lange die jeweilige Taste gedrückt bleibt. Beim Loslassen der Taste springt das Kontaktplättchen elastisch in seine Ausgangsstellung zurück und bringt auch die Taste wieder in ihre Ruhelage.

Die den Kreuzungspunkten der Leiterstreifen bzw. den Tasten zugeordneten Kontaktplättchen, die mittels Tastendruck verformbar sind, benötigen zur Fixierung ihrer korrekten Lage Führungselemente auf der Trägerplatte und müssen dort so festlegbar sein, daß sie zumindest bis

0005175

- 3 -    VPA 78 P 6088 EUR

zum Abschluß der Endmontage ihre Lage nicht verändern können. Durch das Aufsetzen einer die Tastenköpfe umfassenden Abdeckplatte, die der Führung der Tasten dient und mit der Trägerplatte verbindbar ist, können sie durch Halteelemente an dieser Abdeckplatte schließlich endgültig fixiert werden. Das Festlegen von beispielsweise zwölf separaten Kontaktplättchen auf der Matrix wird als fertigungstechnisch nachteilig angesehen und stellt auch ein gewisses Risiko für die Funktionssicherheit dar.

Der Erfindung liegt die Aufgabe zugrunde, eine fertigungstechnisch günstige, universelle, funktionssichere mechanische Kontakteinrichtung für eine Wähltastatur mit elektronischer Kodierung zu schaffen, bei der auch der Nachteil der separaten Kontaktplättchen vermieden ist.

Diese Aufgabe ist erfindungsgemäß dadurch gelöst, daß an jeder Kreuzungsstelle wenigstens einer der beiden beteiligten Leiterstreifen mit einem einstückig angeformten elastischen Kontaktarm versehen ist, über den die betreffenden Leiterstreifen mittels der zugeordneten Taste miteinander kontaktierbar sind. Derartige, an wenigstens einem der sich kreuzenden Leiterstreifen mitgeformte Kontaktarme benötigen keine zusätzliche Montage und sind durch ihre Zuordnung stets richtig positioniert. Sie brauchen nicht separat hergestellt und herangeschafft zu werden und können ihre Funktionslage auch nicht während des endgültigen Zusammenbaus der Tastatur verändern. Die Leiterstreifen mit Kontaktarmen sind auf einfache Weise als Stanz-Biegeteile herstellbar.

Nach einer Weiterbildung des Erfindungsgegenstandes können die Leiterstreifen in beiden Matrixebenen im

0005175

Interesse einer einfachen Montage auf den einander abgewandten Flächen einer Trägerplatte aus Isolierstoff
angeordnet sein. Die Trägerplatte stellt dabei selbst
die Isolation zwischen den sich kreuzenden Leiterstreifen dar und bestimmt die Lage der Matrixebenen.
Die Trägerplatte kann zweckmäßig als Kunststoff-Spritzteil hergestellt sein. Die Trägerplatte kann in den
Bereichen der zwischen den beiden Matrixebenen vermittelnden Kontaktarme mit Durchbrüchen versehen sein, so
daß an diesen Stellen die erwünschten Kontakte herstellbar sind.

An der Trägerplatte kann parallel über einer der Matrixebenen eine Abdeckplatte mit den Kreuzungspunkten
zugeordneten Führungsdurchbrüchen befestigt sein, die
einzeln gradlinig bewegbare Drucktasten enthält. Jede
Taste kann einem der Kontaktarme der ersten Matrixebene zugeordnet und von diesem in Richtung auf ihre
Ruhestellung vorgespannt sein. Abdeckplatte und Trägerplatte können mittels angeformter Rastelemente miteinander verbunden sein.

Wenn die als Stanzteile hergestellten Leiterstreifen
mit einstückig angeformten Haltearmen versehen sind,
können sie mit diesen formschlüssig, z.B. mittels Rastverbindung, in Durchbrüchen der Trägerplatte verankert
sein. Die Haltearme können dazu senkrecht zur Matrixebene verlaufen. Mittels mehrerer solcher Haltearme an
jedem Leiterstreifen und entsprechend auf der Trägerplatte vorgesehener Befestigungsdurchbrüche ist es
möglich, jeden Leiterstreifen auf der Trägerplatte auf
einfachste Weise, durch Auflegen und Einsetzen der Haltearme, in korrekter Lage funktionssicher zu befestigen. Die Leiterstreifen selbst können übrigens je nach
Zweckmäßigkeit mit ihrer Breitenausdehnung parallel
oder rechtwinklig zur Montageebene orientiert sein.

Auch die Kontaktarme können mit ihrer Querschnittsfläche parallel oder senkrecht zur Montageebene, und zwar entsprechend oder abweichend von der Lage der Leiterstreifen angeordnet sein.

Nach einer insbesondere im Hinblick auf kleine Bauhöhe günstigen Weiterbildung des Erfindungsgegenstandes können die blattfederartigen Kontaktarme derart an den Leiterstreifen angeformt sein, daß ihre Hauptebenen zumindest annähernd senkrecht und ihre Längsachsen parallel zur Ebene der Leiterstreifen orientiert sind. Als Haltearme können an den Längsseiten der Kontaktarme bzw. -federn Spreizlappen einstückig mit ausgebildet sein, die im wesentlichen V-förmig abgewinkelt und unter Vorspannung zwischen Wandungen von an der Trägerplatte angebrachten kaminartigen Durchbrüchen oder Ansätzen einsetzbar sind. Mittels derartiger Halteelemente ist das einen Leiterstreifen und Kontaktfedern bildende Bauteil an der Trägerplatte klemmend und/oder verrastend so festlegbar, daß jeder Spreizlappen eine Einspannstelle für wenigstens eine Kontaktfeder definiert.

Die Verringerung der Bauhöhe ergibt sich aus der Orientierung der Hauptebenen der Kontaktfedern: Da diese senkrecht zur Ebene der Leiterstreifen und damit zur Hauptebene des plattenförmigen Trägerkörpers stehen, können sie durch entsprechende geneigte Steuerflächen der Tasten seitlich ausgelenkt werden. Die Befestigung der aus Leiterstreifen und Kontaktfedern bestehenden Bauteile durch die erwähnten Spreizlappen ist nicht nur sehr einfach und damit preiswert sondern auch außerordentlich genau und zuverlässig. Sie vermag Schockbeanspruchungen von einem vielhundertfachen der Erdbeschleunigung widerstehen. Die letztgenannte Eigenschaft ist insbesondere dann von großer Bedeutung, wenn die Schaltermatrix eine Wähltastatur für eine bewegliche Fernsprechteilnehmerstation ist, da die Fernsprechverwaltungen bekanntlich für derartige Geräte eine Stoßfestigkeit verlangen, die in der genannten Größenordnung liegt.

Für die Befestigung der Leiterstreifen an der Trägerplatte ist es besonders günstig, die Kontaktfedern im Bereich ihrer Einspannstelle zwischen an der Trägerplatte vorgesehenen Ansätzen zu lagern. Die Ansätze können dazu eine im wesentlichen quaderförmigen Öffnung umgeben, in die ein im Bereich der jeweiligen Kontaktfeder am Leiterstreifen angeformter, im wesentlichen U-förmig abgebogener Lappen eindrückbar ist. An derjenigen Wandung der Öffnung, an der das umgebogene freie Ende des Lappens anliegt, kann eine hakenartige Rastschulter gebildet sein. Im Bereich ihrer Vorderkante kann diese Schulter von einem Schlitz durchdrungen sein, in den ein Eindrückwerkzeug mit begrenzter Eindringtiefe einführbar ist, so kann der Lappen mit seinem freien Ende in die durch die Rastschulter definierte Raststellung überführt werden, in der er die Kontaktfeder unter Vorspannung gegen die gegenüberliegende Wandung des Hohlraumes andrückt und·in ihrer Position formschlüssig festhält.

Es ist ein besonderer Vorteil der erfindungsgemäß gestalteten Befestigung, daß die betroffenen Bauteile (Trägerkörper und Kontaktfeder) mit Hilfe von Fertigungsautomaten miteinander verbunden werden können.

Gemäß einer vorteilhaften Ausgestaltung können an dem Trägerkörper zu beiden Seiten der von den Ansätzen umgebenen Öffnung Rippen angeformt sein, gegen die sich die Kontaktfeder unter der Wirkung des von dem U-förmig abgebogenen Lappen gebildeten Federelements elastisch abstützt. Auf diese Weise ist eine exakte horizontale Positionierung der Kontaktfeder gegeben.

Es ist ein besonderer Vorteil der erfindungsgemäß gestalteten Befestigung, daß die betroffenen Bauteile (Trägerkörper und Kontaktfeder) mit Hilfe von Fertigungsautomaten miteinander verbunden werden können.

Gemäß einer vorteilhaften Ausgestaltung können an dem Trägerkörper zu beiden Seiten der von den Ansätzen umgebenen Öffnung Rippen angeformt sein, gegen die sich die Kontaktfeder unter der Wirkung des von dem U-förmig abgebogenen Lappen gebildeten Federelements elastisch abstützt. Auf diese Weise ist eine exakte horizontale Positionierung der Kontaktfeder gegeben.

Eine vorteilhafte Weiterbildung der Schaltermatrix gemäß der Erfindung ist dadurch gekennzeichnet, daß die Steuerfedern, d.h. diejenigen Kontaktfedern, die durch die Tasten des Tastenfeldes unmittelbar mechanisch beaufschlagt werden, jeweils paarweise eine gemeinsame von einem der genannten Spreizlappen definierte Einspannstelle besitzen. Hierdurch ergibt sich nicht nur eine Vereinfachung der Montage sondern auch bei gegebenen Raumverhältnissen eine Vergrößerung der wirksamen Federlänge.

Die Steuerfedern der Schaltkontakte erstrecken sich vorzugsweise im wesentlichen in Richtung der zugeordneten Koordinatenleitung, während die von den Steuerfedern beaufschlagten Gegenkontaktfedern an Seitenkanten von rechtwinkelig abgebogenen Ansätzen der zugeordneten Koordinatenleitungen angebracht und gegenüber diesen Ansätzen zumindest annähernd rechtwinkelig abgewinkelt sind und die Ansätze über die Breite der Kontaktfedern hinaus verlängert und ihr freies Ende zu dem genannten V-förmigen Spreizlappen umgebogen ist. Bei den Steuerfedern befinden sich die Spreizlappen vorteilhafterweise in unmittelbarer Nachbarschaft der die Kontaktfedern mit dem

0005175

zugeörigen Leiterstreifen verbindenden Materialstege und an derselben Seitenkante der Kontaktfedern wie diese. Somit können die die Kontaktfedern und Leiterstreifen bildenden Bauteile mit den Spreizlappen unmittelbar von den beiden Seiten des plattenförmigen Trägerkörpers in die zugeordneten Ausnehmungen bzw. zwischen die zugeordneten Wandungen eingedrückt werden, wobei die Leiterstreifen der einzelnen Koordinatenrichtungen auf den einander abgewandten Flächen des Trägerkörpers aufliegen und durch diesen voneinander getrennt werden, während die Kontaktfedern in geeignete Ausnehmungen gelangen, wo sie einander gegenüberstehen.An der Trägerplatte können Ansätze gebildet sein, an denen die Kontaktfedern im Ruhezustand unter Vorspannung anliegen, so daß sich eine Endjustage erübrigt.

Die das freie Ende des V-förmig umgebogenen Spreizlappens bildende Begrenzungskante ist vorteilhafterweise konkav gestaltet, so daß scharfkantige Ecken gebildet werden, mit denen sich der Spreizlappen in dem Werkstoff der Trägerplatte verkrallt. Hierdurch ergibt sich die beschriebene hohe Widerstandsfähigkeit der Befestigung gegen Schockbeanspruchungen.

An den Steuerfedern, die bei der Betätigung einer Taste durch an dem Tastenkörper angebrachte geneigte Steuerflächen senkrecht zur Richtung der Tastenbewegung ausgelenkt werden, wirkt hierbei außer der gewünschten Kraft in Auslenkrichtung auch eine Kraftkomponente senkrecht hierzu. Diese Kraftkomponente verursacht an der Einspannstelle der Kontaktfeder eine Scherbeanspruchung. Um jede Parallelverschiebung der Kontaktfeder durch diese Scherbeanspruchung auszuschließen, empfiehlt es sich, die betreffenden Einspannstellen formschlüssig zu sichern. Dies geschieht vorteilhafterweise dadurch, daß die das freie Ende des V-förmig gebogenen Spreizlappens bildende Begrenzungskante hinter einem an
einer Innenwandung der Trägerplatte gebildeten Rastvorsprung verrastet ist.

Insgesamt ermöglicht die Erfindung den Aufbau einer
Schaltermatrix, mit der sich die z.B. bei Wähltastaturen für Fernsprechteilnehmergeräte geforderte besonders
hohe Kontaktqualität realisieren läßt. Außerdem läßt
sich der für den genannten Einsatzzweck aus funktionellen Gründen erforderliche vergleichsweise große Tastenhub verwirklichen, ohne daß dies zu einer entsprechenden Vergrößerung der Bauhöhe führt. Die Länge des Tastenhubes ist vorgegeben durch eine vorgeschriebene
Betätigungsfolge der Matrixkontakte einerseits und gemeinsamer Hilfskontakte, (die z.B. den von herkömmlichen
Fernsprechnummernschaltern bekannten nsa- und nsi-Kontakten entsprechen), andererseits. Zudem muß zwischen den
Betätigungszeitpunkten einzelner Kontakte gegebenenfalls
eine Zeitspanne vorgegebener Mindestdauer liegen, während
derer die Speisung für eine elektronische Schaltung zur
Verarbeitung der von den Koordinatenkontakten abgegebenen
Steuerinformationen eingeschaltet werden muß.

Die durch den erfindungsgemäßen Aufbau der Schaltermatrix mögliche geringe Bauhöhe des eigentlichen Kontaktteiles ermöglicht es bei einer Wähltastatur für Fernsprechteilnehmergeräte, nicht nur die elektronische
Schaltung zur Verarbeitung der von den Koordinatenkontakten erzeugten Steuerinformationen als Flachbaugruppe unmittelbar mit dem Trägerkörper der Schaltermatrix
zu kombinieren sondern auch eine weitere Flachbaugruppe parallel dazu anzureihen, auf der sich Rufnummernspeicher und dergleichen befinden, ohne daß insgesamt
die Einbaumaße einer herkömmlichen Wähltastatur überschritten werden.

Die an den Leiterstreifen mitgeformten Kontaktfahnen zum direkten Anschluß an eine Schaltungsplatte können so angeordnet sein, daß sie alle senkrecht in eine parallel zur Matrixebene verlaufende Ebene eingreifen. Sie können auch als Kontaktmesser ausgebildet und in auf der Schaltungsplatte vorgesehene, federnde Steckbuchsen einsetzbar sein. Auf diese Weise ist das Auswechseln von Schaltungsplatten, z.B. für unterschiedliche Wählverfahren, schnell und einfach ohne Werkzeug möglich. Mechanischer und elektronischer Teil einer so aufgebauten Wähltastatur sind praktisch mit einem Handgriff völlig von einander zu trennen und genau so bequem auch wieder zu vereinigen.

Es ist nun besonders vorteilhaft, die Schaltungsplatte in einem geringen Abstand parallel zur Matrixebene anzuordnen und dabei die Seite mit den Bauelementen der Trägerplatte zuzuwenden. Die Bauelemente sind auf diese Weise im Raum zwischen Trägerplatte und Leiterplatte mechanisch geschützt aufgenommen. Weiteren Schutz gewährt die Trägerplatte, wenn sie mit einem nach der von den Tastenköpfen abgewandten Seite offenen, kastenartigen Rand versehen ist, der sie versteift und als Anlagekante für die Schaltungsplatte der Wähltastatur geeigenet ist. Der kastenartige Rand der Trägerplatte kann mit zusätzlichen, der Führung der Schaltungsplatte dienenden Vorsprüngen versehen sein, die mit Ausklinkungen im Randbereich der Schaltungsplatte zusammenwirken. Beim Aufsetzen der Schaltungsplatte auf die offene Seite des kastenartigen Randes der Trägerplatte finden sich die entsprechend angeordneten Kontaktmesser mit den Steckverbindern auf der Leiterplatte zwangsläufig zusammen und stellen die galvanische Verbindung zwischen den Tastkontakten und der Elektronik her. Schließlich kann auch die Schaltungsplatte in ihrer endgültigen Stellung von am Rand der Trägerplatte vorgesehenen Rastelementen übergriffen und so in ihrer Lage positioniert sein. Genauso ist es natürlich auch möglich, sie mit dem mechanischen Teil der Wähltastatur z.B. zu verschrauben.

Es können mit Vorteil auch an beiden, jeweils eine Kreuzung bildenden Leiterstreifen Kontaktarme vorgesehen sein, wobei sich die Kontaktarme des einen der beiden Leiterstreifen jeweils wenigstens bis annähernd in die Ebene des anderen erstrecken. Auf diese Weise braucht der die Kontaktbewegung ausführende Arm nicht einmal in einen Durchbruch der Trägerplatte hinein versenkt zu werden.

Auch Doppelkontakte mit hochwertiger Kontaktfunktion sind für eine derartige Wähltastatur mit geringem Mehraufwand herstellbar, indem z.B. der jeweils die Arbeitsbewegung ausführende Kontaktarm als rechteckiger, flacher Rahmen aus zwei durch einen Steg verbundenen Einzelarmen an einem Leiterstreifen gebildet ist, und an zwei Endbereichen des parallel zum Leiterstreifen verlaufenden Steges mit jeweils einem von zwei an einem der Leiterstreifen der anderen Matrixebene vorgesehenen, aus dieser Ebene herüberragenden Gegenkontakten zusammenwirken.

Im folgenden sei die Erfindung anhand von in den Figuren dargestellten Ausführungsbeispielen näher beschrieben. Es zeigen:

Fig. 1 eine Wähltastatur in vereinfachter, auseinandergezogener Perspektivdarstellung,

Fig. 2 eine Seitenansicht einer vervollständigten Tastatur nach Figur 1 im Schnitt,

Fig. 3 ein Detail eines Tastkontakts nach einem anderen Ausführungsbeispiel, in vereinfachter Perspektivdarstellung,

Fig. 4 das Detail nach Figur 3 in Seitenansicht, im Schnitt,

Fig. 5 in schematischer Darstellung die Aufsicht eines plattenförmigen Trägerkörpers für eine andere Wähltastatur eines Fernsprechteilnehmergerätes,

Fig. 6 den Trägerkörper gemäß Fig. 5 in einer Untersicht,

Fig. 7 in vergrößerter Darstellung ein Detail von Fig. 5,

Fig. 8 ebenfalls in vergrößerter Darstellung ein Detail von Fig. 6,

Fig. 9 einen Schnitt längs der Linie IX-IX von Fig. 7,

Fig.10 einen Schnitt längs der Linie X-X von Fig. 8,

Fig. 11 in perspektivischer Darstellung die Kontaktteile eines Kreuzpunktes der Wähltastatur gemäß Fig. 5ff., wobei der Trägerkörper nicht dargestellt ist,

Fig.12 in teilweise geschnittener, perspektivischer Ansicht einen Teil eines Trägerkörpers mit Ansätzen und Ausnehmungen zur Befestigung einer Kontaktfeder,

Fig. 13 einen Querschnitt durch eine Kontaktfeder mit angeformten Federlappen,

Fig. 14 und 15 in Schnittzeichnungen den Trägerkörper mit eingesetzter bzw. verrasteter Kontaktfeder und

Fig. 16 in gegenüber den vorhergehenden Figuren verkleinerter Darstellung eine weitere Schnittzeichnung des Trägerkörpers mit eingesetzter Kontaktfeder.

Die in den Zeichnungen schematisch und auszugsweise dargestellten Ausführungsbeispiele von Wähltastaturen umfassen außer (nicht dargestellten) gemeinsamen Kontakten, d.h. Kontakten, die bei jeder Tastenbetätigung wirksam werden, zwölf an den Kreuzungspunkten von Koordinatenleitungen angeordnete Schaltkontakte, die individuell durch Tastenbetätigung wirksam werden. Jeder Schaltkontakt umfaßt eine Steuerfeder sowie einen Gegenkontakt.

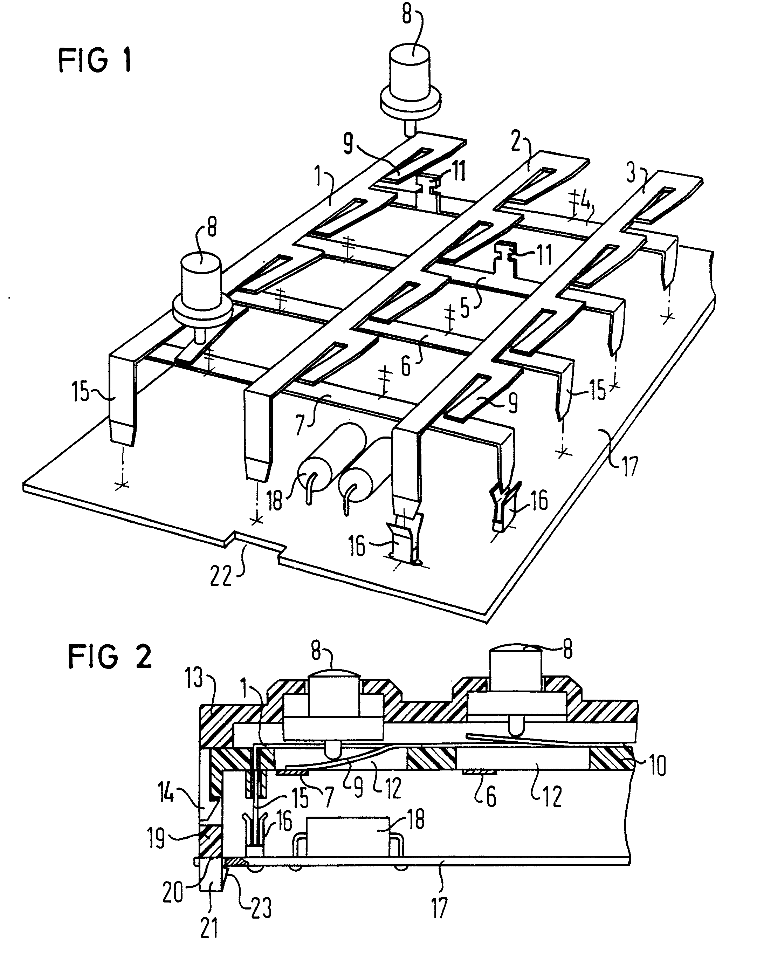

Wie aus Figur 1 und 2 zu erkennen, besitzt der mechanische Teil der Wähltastatur mehrere parallele, in zwei parallelen Ebenen kreuzweise verlaufende, eine Matrix bildende Leiterstreifen 1...7. Jedem Kreuzungspunkt sei eine senkrecht zur Matrixebene bewegbare Taste 8 zugeordnet. Die Leiterstreifen 1, 2 und 3 der ersten, den Tasten zugewandten Matrixebene besitzen je Kreuzungstelle einen elastischen Kontaktarm 9, der mittels Tastendruck gegen die zweite Ebene auslenkbar ist und dabei Kontakt mit dem entsprechenden Leiterstreifen 4, 5, 6 oder 7 der zweiten Ebene herstellt. In Figur 1 ist eine Taste 8 am Kreuzungspunkt zwischen Leiterstreifen 1 und 7 in Arbeitsstellung, und eine weitere Taste 8 am Kreuzungspunkt zwischen Leiterstreifen 1 und 4 in herausgezogener Ruhestellung gezeichnet.

Die Leiterstreifen sind zu beiden Seiten einer Trägerplstte 10 aus Isolierstoff befestigt. Die Trägerplatte besitzt Durchbrüche, in die an dem Leiterstreifen mitgeformte Halteelemente 11 eingreifen, von denen in Figur 1 als Beispiel zwei verdrehbare Lappen zur formschlüssigen Befestigung dargestellt sind. Weitere Durchbrüche 12 der Trägerplatte ermöglichen die Kontaktgabe zwischen den auf beiden Seiten der Trägerplatte voneinander isoliert angeordneten Leiterstreifen mittels der die Durchbrüche durchsetzenden Kontaktarme.

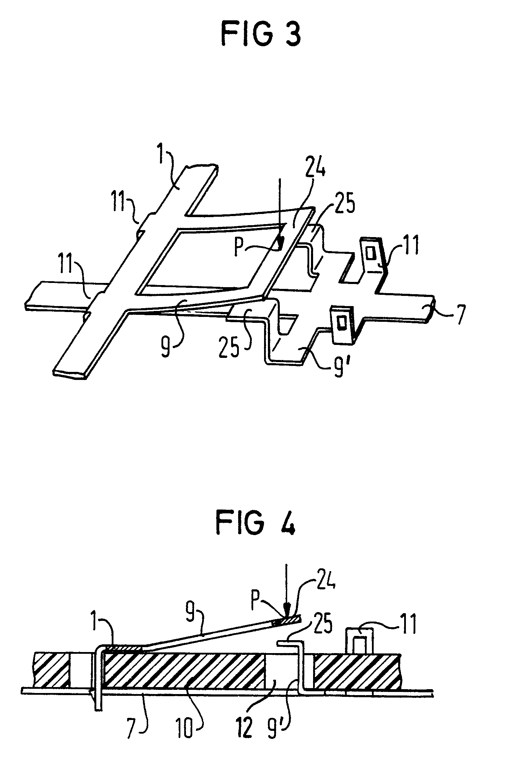

Die Tasten 8 wirken in den Beispielen nach Fig. 1...Fig.4 direkt auf diese Kontaktarme und sind von diesen auf ihre Ruhelage vorgespannt. Die Tasten sind aufgenommen und geführt in einer Abdeckplatte 13, die mit Rastelementen 14 an der Trägerplatte 10 befestigt ist.

Die Leiterstreifen 1...7 sind mit senkrecht zur Matrixebene abgewinkelten Kontaktmessern 15 versehen, die mit
Steckbuchsen 16 auf einer die Kodierschaltung enthaltenden Leiterplatte 17 korrespondieren. Selbstverständlich
ist es auch möglich, derartige Kontaktmesser an beiden
Enden oder im mittleren Bereich eines jeweiligen Leiterstreifens anzubringen und Leiterstreifen durch isolierende Unterbrechungen in mehrere unabhängige Abschnitte zu unterteilen. Auf diese Weise können bestimmte Tasten
für von der Kodierungsschaltung unabhängige Sonderfunktionen genutzt werden. Von den Steckbuchsen 16 sind nur
zwei Stück ausführlich dargestellt. Die Lage der übrigen,
wie auch die Lage der nicht gezeichneten Halteelemente 11,
ist durch Achsenkreuze in Fig. 1 angedeutet. Die Schaltungsplatte ist so am mechanischen Teil der Tastatur angeordnet, daß die darauf enthaltenden elektrischen Bauelemente 18, von denen als Beispiel nur zwei Widerstände dargestellt sind, zwischen Trägerplatte und Schaltungsplatte mechanisch geschützt sind. Die im wesentlichen ebene Trägerplatte 10 im Ausführungsbeispiel nach
Fig. 2 bildet einen kastenartigen, nach der von den
Tasten abgewandten Seite offenen Rand 19, der eine umlaufende Anlagekante 20 für die Schaltungsplatte im richtigen Abstand zu den Kontaktmessern 15 an den Leiterstreifen bildet. Durch diesen Rand ist der die Bauelemente auf der Schaltungsplatte enthaltende Raum auch
nach den Seiten weitgehend abgeschlossen.

Der kastenartige Rand der Trägerplatte weist über die
Auflageebene für die Schaltungsplatte hinausgehende
Führungsvorsprünge 21 auf, die in Ausklinkungen 22 am
Rand der Schaltungsplatte eingreifen und so die Lage
der Schaltungsplatte beim Aufsetzen positionieren. Die
Vorsprünge sind mit Rastelementen 23 kombiniert, die die
Schaltungsplatte in ihrer Funktkonslage übergreifen und
eine lösbare Verbindung zwischen Schaltungs- und Trägerplatte herstellen. Die Schaltungsplatte ist mit einer nicht dargestellten, flexiblen Anschlußleitung versehen und z.B. durch Steckanschlüsse galvanisch mit der Schaltung eines Fernsprechgerätes verbindbar.

Wie in Figur 3 und 4 zu sehen, können auch beide an einer Kreuzung beteiligten Leiterstreifen mit Kontaktarmen 9,9' versehen sein und es ist auch die Bildung von Doppelkontakten möglich. Auch die für den Eingriff in die Trägerplatte bestimmten Halteelemente 11, hier als Rastzungen dargestellt, können jeweils paarweise angeordnet sein.

Der die Arbeitsbewegung ausführende Kontaktarm ist hier, an einem Leiterstreifen 1 der ersten Matrixebene aus zwei parallelen Einzelkontaktarmen 9 und einem deren freie Enden verbindenden Steg 24 gebildet. Dieser rahmenförmige, bewegliche Doppelarm wirkt mit zwei starren Gegenkontaktwinkeln 25 zusammen, die von Kontaktarmen 9' am entsprechenden Leiterstreifen 7 der zweiten Ebene gebildet sind. Im dargestellten Ausführungsbeispiel durchsetzen die starren Gegenkontaktwinkel 25 die Trägerplatte in Richtung auf die erste Matrixebene. Der bewegliche Kontaktarm braucht in diesem Fall bei seiner Arbeitsbewegung nicht in den Durchbruch der Matrix hinein bewegt zu werden.

Der Angriffspunkt P für die Taste 8 liegt auf dem parallel zum Leiterstreifen verlaufenden Steg 24, in der Mitte zwischen den Gegenkontakten 25, und ermöglicht so eine elastische Betätigung des Doppelkontakts.

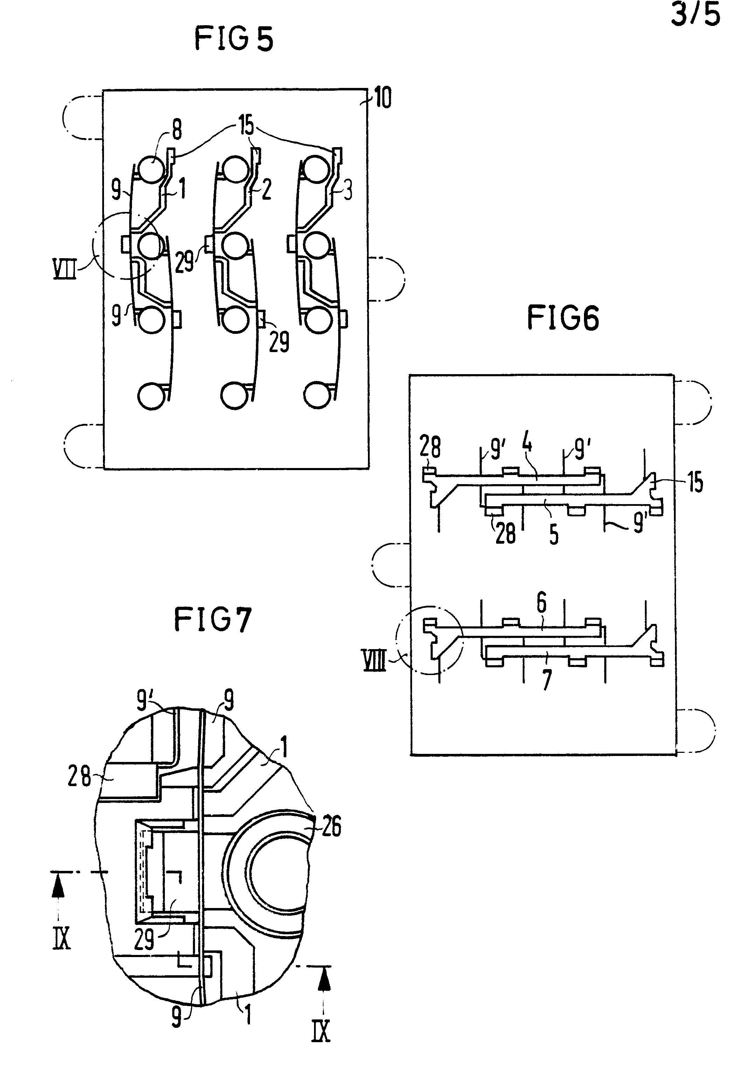

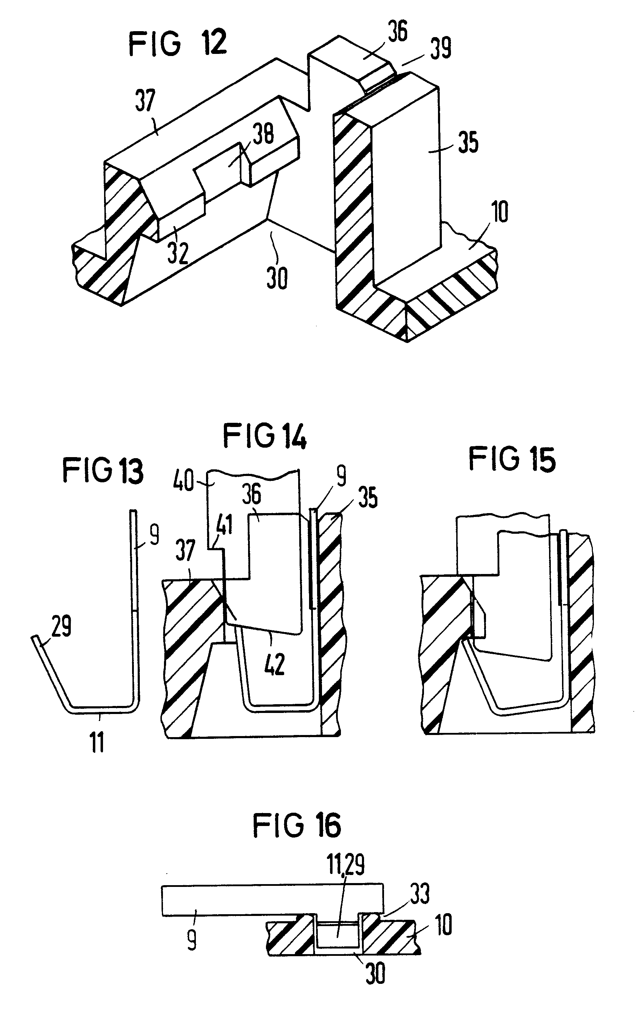

Die gegenseitige Zuordnung von Steuerfeder und Gegenkontakt ist für ein anderes Ausführungsbeispiel am besten aus Fig. 11 erkennbar. Sowohl die Steuerfedern 9 als auch die Gegenkontakte 9' sind einstückig mit den zugehörigen Koordinatenleitungen 1...7 ausgebildet. Diese Koordinatenleitungen sind mit den zugehörigen Kontaktfedern als Biegestanzteile hergestellt. In dem in Fig. 5...11 dargestellten Ausführungsbeispiel weisen abweichend vom Ausführungsbeispiel gemäß Fig. 1 die Leiterstreifen 1,2,3 einen mehrfach abgewinkelten Zuschnitt auf.

Die Steuerfedern 9 sind diesen im wesentlichen in Richtung der Matrixspalten verlaufenden Koordinatenleitungen 1,2,3 zugeordnet, während die Gegenkontaktfedern 9' an die in Richtung der Matrixzeilen verlaufenden Koordinatenleitungen 4...7 angeformt sind. Die Spaltenleitungen 1,2,3 befinden sich an der Oberseite, die Zeilenleitungen 4...7 an der Unterseite des Trägerkörpers 10 (Fig. 5 bzw. 6). Die Steuerfedern 9 der Schaltkontakte verlaufen im wesentlichen in derselben Richtung wie die ihnen zugeordneten Spaltenleitungen 1,2,3. Die Gegenkontaktfedern 9' sind gegenüber den ihnen zugeordneten Zeilenleitungen 4...7 etwa rechtwinkelig abgekantet, so daß sie nach ihrer Festlegung am Trägerkörper 10 parallel zu den Steuerfedern 9 verlaufen (Fig. 11). Die Gegenkontaktfedern 9' befinden sich an rechtwinkelig abgebogenen als Halteelemente dienenden Ansätze 11 der Zeilenleitungen 4...7. Diese Ansätze 11 sind hier über die Breite der Gegenkontaktfedern 9' hinaus verlängert. Mit ihrem freien Ende sind sie zu Spreizlappen 28 umgebogen. Entsprechende Spreizlappen 29 sind - jedoch mit entgegengesetzter Richtungsorientierung - an den Steuerfedern 9 angeformt.

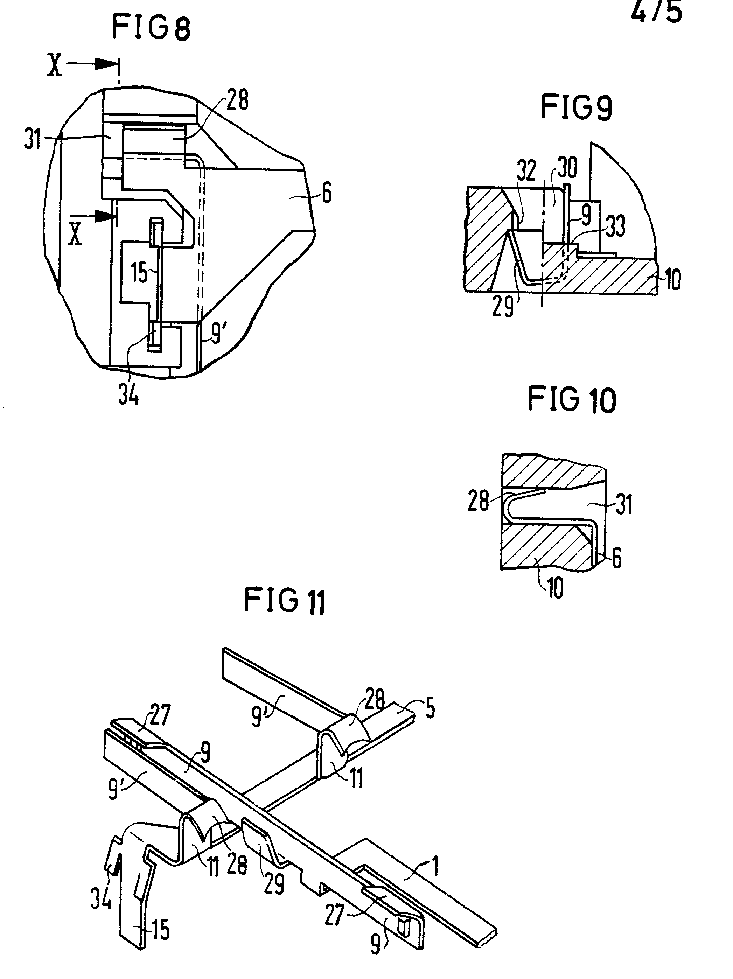

Die Spreizlappen 28 bzw. 29 dienen zur Befestigung der Kontaktfedern und Koordinatenleitungen am Trägerkörper 10. Dieser bildet von Innenwandungen begrenzte Öffnungen 30 bzw. 31 (Fig. 9, 10) in welche die Spreizlappen 29 bzw. 28 unter Vorspannung eingeführt werden und gegen deren Wandungen sie sich abstützen. Während die Spreizlappen 28 der Zeilenleitungen 4...7 durch eine konkave Gestaltung der das freie Ende bildenden Begrenzungsseite scharfkantige Ecken besitzen (Fig.11), mit denen sie sich in dem

0005175

Werkstoff des Trägerkörpers 10 in der Öffnung 31 verkrallen (Fig.10), verrasten die Spreizlappen 8 beim Einsetzen in den Trägerkörper 10 in der Öffnung 30 hinter Rastvorsprüngen 32 (Fig. 9). Durch diese Verrastung ist die die Einspannstelle für die Steuerfedern 9 bildende Verbindung zwischen dem Spreizlappen 29 und dem Trägerkörper 10 formschlüssig gesichert. Im Bereich der Öffnung 30 des Trägerkörpers 10 sind Auflageschultern 33 für die dem Spreizlappen 29 benachbarten Bereiche der Steuerfedern 9 angebracht. Da sich das freie Ende des Spreizlappens 29 unter Vorspannung an der Unterseite des Rastvorsprunges 32 abstützt, liegt die Kontaktfeder 9 mit einer entsprechenden Vorspannung auf den Schultern 33 auf, so daß ihre Position justierfrei festgelegt ist. Die beschriebene Befestigung der Steuerfedern 9 stellt sicher, daß bei deren Auslenkung durch die (nicht dargestellten) z.B. in hohlzylindrischen Ansätzen 26 des Trägerkörpers 10 geführten Tastenkörper jede Parallelverschiebung der Steuerfedern 9 in Richtung der Tastenbewegung ausgeschlossen ist. Die Tastenkörper 8 wirken mit geneigten Steuerflächen auf abgewinkelte Steuerlappen 27 ein, die an den Steuerfedern 9 in deren kontaktgebendem Bereich angeformt sind. Da bei der Auslenkung der Steuerfedern 9 durch die jeweiligen Tasten außer den horizontalen Kraftkomponenten auch eine senkrechte Kraftkomponente entsteht, kommt der beschriebenen Festlegung besondere Bedeutung zu. Die in Fig. 5 erkennbare Aufsicht auf die Spaltenleitungen 26 sowie die auszugsweise perspektivische Darstellung in Fig. 11 zeigen, daß je zwei Steuerfedern 9 eine gemeinsame Einspannstelle besitzen, die jeweils durch einen der Spreizlappen 29 definiert ist. Durch diese paarweise Zusammenfassung der Steuerfedern 9 vereinfacht sich der Aufbau der Wähltastatur.

Ein Ende der Zeilenleiter 4...7 ist senkrecht nach unten abgebogen (Fig. 11) und bildet mit seinem Endbereich ein Kontaktmesser 15, das in eine entsprechende Kontaktbuchse 16 einer als gedruckte Leiterplatte 17 ausgebildeten elektronischen Schaltung unmittelbar eingefügt werden kann. Abgewinkelte Spreizlappen 34, die sich gegen entsprechende an dem Trägerkörper gebildete Schultern abstützen, nehmen die beim Trennen der Steckverbindung auftretenden Ziehkräfte auf. Entsprechende Kontaktmesser sind auch an den Spaltenleitungen 1, 2, 3 an den in Fig. 5 mit 15 bezeichneten Stellen angebracht.

In den Figuren 12...16 ist das Prinzip der Festlegung der Leiterstreifen bzw. Kontaktfedern auf einer Trägerplatte mittels angeschnittener Spreizlappen noch ausführlicher dargestellt. Die Trägerplatte 10 besitzt hier mitgeformte Ansätze 35, 36 und 37. Diese Ansätze umgeben einen im wesentlichen quaderförmigen Durchbruch 30. An der von dem Ansatz 37 begrenzten Wandung dieses Durchbruches befindet sich ein hakenartig ausgebildeter Rastvorsprung 32, der zentral von einem Schlitz 38 durchdrungen ist. Zwischen den Ansätzen 35 und 36 ist ein Führungsschlitz 39 zur Aufnahme einer Kontaktfeder 9 gebildet. An der Kontaktfeder 9 ist ein Haltearm 11 angeformt, dessen freier Schenkel wieder als U-förmig abgewinkelter Spreizlappen 29 ausgebildet ist.

Zur Montage wird die Kontaktfeder derart in den Trägerkörper eingesetzt, daß der U-förmige Lappen in den von den Ansätzen 35, 36 und 37 begrenzten Schacht gelangt. Wenn die Kontaktfeder 9 mit ihrer Unterseite den Grund der Schlitze 39 erreicht, liegt das freie Ende des Spreizlappens 29 an der Vorderkante des Rastvorsprunges 32 an (Fig. 14). Zum Eindrücken des Haltearms 11 in seine Endposition kann ein Werkzeug 40 dienen, das mit einer geeignet geformten Rippe in dem Schlitz 38 des Rastvorsprunges 32 geführt ist. Die Eindringtiefe des Werkzeuges 40 ist durch eine Anschlagschulter 41 begrenzt

0005175

und so bemessen, daß der als Rasthaken wirkende Spreizlappen 29 bei dem Eindrückvorgang nicht bleibend deformiert werden kann, sondern auf Grund seiner elastischen Richtkraft von der Unterseite 42 des Werkzeuges 40 abgeleitet, sobald er von diesem unter den Rastvorsprung 32 geführt wird. Durch eine leichte Neigung der Unterseite 42 des Werkzeuges 40 wird dieses Abgleiten begünstigt. Fig. 15 zeigt die Kontaktfeder in montiertem Zustand. Man erkennt, daß der Lappen 29 des Haltearmes 11 außer Eingriff mit dem Werkzeug 40 gelangt ist. Die Kontaktfeder 9 ist durch den hinter dem Vorsprung 32 verrasteten Spreizlappen 29 formschlüssig an der Trägerplatte 10 festgelegt. Durch die Richtkraft des aus Haltearm 11 und Spreizlappen 29 bestehenden Federelementes wird die Kontaktfeder 9 mit ihrer Unterkante gegen am Grund des Schlitzes 39 gebildete Auflageschultern 33 gedrückt, so daß er ohne weitere Justierung eine genaue horizontale Position einnimmt.

Auf Grund der vorangehend beschriebenen speziellen Ausbildung eignet sich die Befestigung in besonderer Weise für eine maschinelle Montage. Dieser Umstand ermöglicht zusammen mit der Tatsache, daß separate Befestigungselemente wie Schrauben oder Nieten und besondere Befestigungsverfahren wie Umspritzen oder Ultraschallschweißen nicht erforderlich sind, eine beträchtliche Verbilligung der Kontaktanordnung, ohne daß dadurch ihre funktionelle Qualität, insbesondere ihre Widerstandsfähigkeit gegen Stoßbeanspruchungen, beeinträchtigt werden.

8 Patentansprüche
16 Figuren

Patentansprüche.

1. Wähltastatur für fernmeldetechnische Geräte, insbesondere Fernsprechgeräte, mit einer mechanischen Kontakteinrichtung aus mehreren matrixartig in zwei parallelen Ebenen jeweils parallel verlaufenden, sich von einer Ebene zur anderen rechtwinklig kreuzenden, gegeneinander isolierten, eigenstabilen, auf einer Trägerplatte festgelegten Leiterstreifen, weiterhin mit den Kreuzungspunkten zugeordneten, senkrecht zur Matrixebene niederdrückbaren Tasten und mit an den Leiterstreifen einstückig mitgeformten Anschlußfahnen für die unmittelbare galvanische Verbindung der Kontakteinrichtung mit einer dazugehörigen, von einer Schaltungsplatte gebildeten, elektronischen Kodiereinrichtung, d a d u r c h  g e k e n n z e i c h n e t , daß an jeder Kreuzungsstelle wenigstens einer der beiden beteiligten Leiterstreifen (z.B. 1 und 4) mit einem einstückig angeformten, elastischen Kontaktarm (9) versehen ist, über den die betreffenden Leiterstreifen mittels der zugeordneten Taste (8) miteinander kontaktierbar sind.

2. Wähltastatur nach Anspruch 1, d a d u r c h  g e - k e n n z e i c h n e t , daß die Leiterstreifen (1...7) der beiden Matrixebenen auf den einander abgewandten Flächen einer Trägerplatte (10) aus Isolierstoff befestigt sind und daß die Trägerplatte in den Bereichen der zwischen den beiden Ebenen vermittelnden Kontaktarme (9,9') jeweils mit Durchbrüchen (12) versehen ist.

3. Wähltastatur nach Anspruch 2, d a d u r c h  g e - k e n n z e i c h n e t , daß die Leiterstreifen (1...7) mit einstückig angeformten Halteelementen (11) versehen sind, die in eigenen Durchbrüchen (30,31) der Trägerplatte formschlüssig festgelegt sind.

0005175

4. Wähltastatur nach Anspruch 3, d a d u r c h   g e -
k e n n z e i c h n e t ,  daß die Kontaktarme (9,9')
derart an den Leiterstreifen (1...7) angeformt sind, daß
ihre Hauptebenen zumindest annähernd senkrecht und ihre
Längsachsen parallel zur Ebene der Leiterstreifen (3,4)
orientiert sind und daß als Halteelemente (11) an Längsseiten der Kontaktarme (9,9') Spreizlappen (28, 29)
einstückig angeformt sind, die im wesentlichen V-förmig
abgewinkelt sind und unter Vorspannung zwischen Wandungen von an der Trägerplatte angebrachten kaminartigen
Öffnungen (30,31) oder Ansätzen einsetzbar sind und mittels derer das einen Leiterstreifen (1...7) und Kontaktarme (9,9') bildende Bauteil an der Trägerplatte (10)
klemmens und/oder verrastend gehalten ist, wobei jeder
Spreizlappen (28, 29) eine Einspannstelle für wenigstens
einen Kontaktarm (9,9') definiert.

5. Wähltastatur nach Anspruch 4, d a d u r c h   g e -
k e n n z e i c h n e t ,  daß der Kontaktarm (9) im Bereich seiner Einspannstelle zwischen an der Trägerplatte
(10) angeformten Ansätzen (35, 36, 37) gelagert ist, daß
diese Ansätze (35, 36, 37) eine im wesentlichen quaderförmige Öffnung (30) umgeben, die einen an dem Kontaktarm (9) angeformten, im wesentlichen U-förmig abgebogenen
Spreizlappen (29) aufnimmt, daß an derjenigen Wandung der
Öffnung (30), an der das umgebogene freie Ende des Lappens anliegt, eine hakenartige Rastschuler (32) gebildet
ist, die im Bereich ihrer Vorderkante von einem Schlitz
(38) durchdrungen ist, in den ein Eindrückwerkzeug (40)
mit begrenzter Eindringtiefe einführbar ist, mittels
dessen der Lappen (29) mit seinem freien Ende in die
durch die Rastschulter (32) definierte Raststellung (Fig.15)
überführbar ist, in der er den Kontaktarm (9) unter Vorspannung gegen die gegenüberliegende Wandung der Öffnung
(30) andrückt und in seiner Position formschlüssig festhält.

6. Wähltastatur nach Anspruch 1, d a d u r c h   g e -
k e n n z e i c h n e t ,  daß die an den Leiterstreifen
1...7 mitgeformten Anschlußfahnen als Kontaktmesser (15)
ausgebildet sind und in mit der Schaltungsplatte (17)
mechanisch und galvanisch verbundene Steckbuchsen (16)
einsetzbar sind.

7. Wähltastatur nach Anspruch 6, d a d u r c h   g e -
k e n n z e i c h n e t ,  daß die Trägerplatte mit
einem kastenartigen, nach der von den Tastenköpfen abgewandten Seite offenen Rand (19) versehen ist, der eine
Anlagekante (20) für die Schaltungsplatte (17) der Tastatur bildet, und über die Kante hinaus vorstehende
Führungsvorsprünge (21) aufweist, die mit Ausnehmungen
(22) im Randbereich der Schaltungsplatte (17) korrespondieren.

8. Wähltastatur nach Anspruch 2, d a d u r c h   g e -
k e n n z e i c h n e t ,  daß an beiden eine Kreuzung
bildenden Leiterstreifen Kontaktarme (9,9') vorgesehen
sind, wobei sich die Kontaktarme des einen der beiden
Leiterstreifen jeweils wenigstens bis annähernd in die
Ebene des anderen Leiterstreifens erstrecken.

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15

FIG 16

**Europäisches Patentamt**

# EUROPÄISCHER RECHERCHENBERICHT

0005175

EP 79 10 ...

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | US – A – 3 472 974 (McGOUGH) * Spalte 3, Zeile 8 – Spalte 4, Zeile 65; Figuren * | 1–4,7, 8 | H 04 M 1/23 H 01 M 13/70 |
| | US – A – 3 786 205 (LIEN) * Spalte 3, Zeile 35 – Spalte 5, Zeile 14; Figuren * | 1,7 | |
| | FR – A – 2 321 150 (IBM FRANCE) * Seite 4, Zeile 14 – Seite 5, Zeile 11; Figuren * | 1,6 | RECHERCHIERTE SACHGEBIETE (Int. Cl.²) H 04 M 1/23 H 01 H 19/70 |
| | BE – A – 862 076 (TELEFONAKTIEBOLA-GET L.M. ERICS-SON) * Seite 3, Zeile 26 – Seite 4, Zeile 15; Seite 5, Zeilen 21–29; Figuren * | 1,3,4 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | ... 1979 | KEPPENS |

EPA form 1503.1   06.78